# EUROPÄISCHE PATENTANMELDUNG

(11) **EP 4 527 680 A1**
(43) Veröffentlichungstag der Anmeldung: **26.03.2025**
(21) Anmeldenummer: 23198763.7
(22) Anmeldetag: 21.09.2023
(51) Int. Cl.: B60L 53/16, H01R 13/44, H01R 13/627, H01R 13/629

(54) **LADESTECKDOSE FÜR EIN ELEKTROFAHRZEUG, VERFAHREN ZUR HERSTELLUNG DER LADESTECKDOSE**

(71) Anmelder: ITT Cannon GmbH, D-71384 Weinstadt (DE)
(72) Erfinder: Richter, Sebastian, 73614 Schorndorf (DE); Bihrer, Marcus, 75382 Althengstett (DE)
(74) Vertreter: DREISS Patentanwälte PartG mbB

(57) **Zusammenfassung**

Ladesteckdose (1) für ein Elektrofahrzeug, Verfahren zur Herstellung der Ladesteckdose (1), wobei die Ladesteckdose (1) einen Isolierkörper (2) umfasst, wobei der Isolierkörper (2) Hülsen (3) zur Aufnahme je eines elektrischen Kontakts (4) der Ladesteckdose (1) aufweist, wobei ein jeweiliger elektrischer Kontakt (4) durch eine jeweilige Hülse (3) von den anderen elektrischen Kontakten (4) elektrisch isoliert ist, wobei die Ladesteckdose (1) einen Gehäusekörper (5) aufweist, wobei der Isolierkörper (2) im Gehäusekörper (5) angeordnet ist.

## Beschreibung

Die Erfindung geht von einer Ladesteckdose für ein Elektrofahrzeug und einem Verfahren zur Herstellung der Ladesteckdose aus.

Die Norm IEC62196 2015-06 (Teil 1), 2017-11 (Teil 2), 2020-03 (Teil 3) definiert eine derartige Ladesteckdose.

Durch die Ladesteckdose und das Verfahren zur Herstellung der Ladesteckdose wird eine modulare Ladesteckdose bereitgestellt.

Die Ladesteckdose ist in verschiedene Module unterteilt, um ein hohes Maß an Individualisierung durch die Auswahl verschiedener Module und die Einführung eines kundenspezifischen Designs durch Anpassung einzelner Module zu ermöglichen.

Es können verschiedene Kontakttypen, verschiedene Verriegelungsmechanismen, kundenspezifische Montageschnittstellen, eine optionale Deckelabdeckung und ein optionaler Berührungsschutz vorgesehen sein.

Die Ladesteckdose für ein Elektrofahrzeug umfasst einen Isolierkörper, wobei der Isolierkörper Hülsen zur Aufnahme je eines elektrischen Kontakts der Ladesteckdose aufweist, wobei ein jeweiliger elektrischer Kontakt durch eine jeweilige Hülse von den anderen elektrischen Kontakten elektrisch isoliert ist, wobei die Ladesteckdose einen Gehäusekörper aufweist, wobei der Isolierkörper im Gehäusekörper angeordnet ist. Die Verwendung der beiden separate Körper, d.h. des Isolierkörpers und des Gehäusekörpers, ermöglicht die Modularität.

In einer Ausführungsform der Ladesteckdose ist der Isolierkörper aus einem flammengeschützten Kunststoff ausgebildet, wobei der Gehäusekörper aus einem flammengeschützten Kunststoff oder zumindest teilweise aus einem nicht flammengeschützten Kunststoff ausgebildet ist. Die z.B. von der Norm IEC62196 vorgegebene Anforderung hinsichtlich des Flammenschutzes wird durch die Verwendung des Isolierkörpers aus flammengeschütztem Kunststoff erreicht. Der Gehäusekörper kann aus flammengeschütztem Kunststoff hergestellt sein oder zumindest teilweise aus nicht flammengeschütztem Kunststoff. Dies ermöglicht je nach Anwendung oder Budget eine Wahl des für den Gehäusekörper verwendeten Materials.

Es kann vorgesehen sein, dass der Isolierkörper und der Gehäusekörper durch eine erste Rastverbindung oder durch eine Schraubverbindung oder durch eine Ultraschallschweißverbindung oder durch eine Klebeverbindung verbunden sind. Dies ermöglicht je nach Anwendung die Wahl der Verbindung.

Die erste Rastverbindung weist z.B. wenigstens eine Lasche und wenigstens eine Rastnase auf. In einer Ausführungsform der ersten Rastverbindung sind die wenigstens eine Lasche am Isolierkörper und die wenigstens eine Rastnase am Gehäusekörper derart angeordnet und ausgebildet, dass die wenigstens eine Rastnase bei in den Gehäusekörper eingesetztem Isolierkörper in die wenigstens eine Lasche eingerastet ist. In einer Ausführungsform der ersten Rastverbindung sind die wenigstens eine Lasche am Gehäusekörper und die wenigstens eine Rastnase am Isolierkörper derart angeordnet und ausgebildet, dass die wenigstens eine Rastnase bei in den Gehäusekörper eingesetztem Isolierkörper in die wenigstens eine Lasche eingerastet ist.

Vorzugsweise weist die Ladesteckdose einen Kontakthalter auf, wobei der Kontakthalter ausgebildet ist, den Isolierkörper im Gehäusekörper zu halten oder wobei der Isolierkörper ausgebildet ist, den Kontakthalter im Gehäusekörper zu halten. Dies ermöglicht unterschiedliche Konfigurationen. Entweder hält der Kontakthalter die Kontakte und den Isolierkörper, oder Kontakthalter hält die Kontakte und wird vom Isolierkörper gehalten.

Der Kontakthalter ist in einer Ausführungsform der Ladesteckdose mittels wenigstens einer Schraube mit dem Gehäusekörper verbunden. Dies stellt eine Ausführungsform der Schraubverbindung dar.

Der Kontakthalter ist in einer Ausführungsform der Ladesteckdose mittels einer zweiten Rastverbindung mit dem Isolierkörper verbunden. Das bedeutet, der Isolierkörper trägt den Kontakthalter.

Die zweite Rastverbindung weist vorzugsweise wenigstens eine Lasche und wenigstens eine Rastnase auf. In einer Ausführungsform der zweiten Rastverbindung sind die wenigstens eine Lasche am Kontakthalter und die wenigstens eine Rastnase am Gehäusekörper derart angeordnet und ausgebildet, dass die wenigstens eine Rastnase bei in den Gehäusekörper eingesetztem Kontakthalter in die wenigstens eine Lasche eingerastet ist. In einer Ausführungsform der zweiten Rastverbindung sind die wenigstens eine Lasche am Gehäusekörper und die wenigstens eine Rastnase am Kontakthalter derart angeordnet und ausgebildet, dass die wenigstens eine Rastnase bei in den Gehäusekörper eingesetztem Kontakthalter in die wenigstens eine Lasche eingerastet ist.

Es kann vorgesehen sein, dass der Gehäusekörper zumindest abschnittsweise eine Wand mit einer Innengeometrie zur Aufnahme des Isolierkörpers umfasst, wobei der Isolierkörper zumindest abschnittsweise eine Wand mit einer mit der Innengeometrie korrespondierenden Außengeometrie aufweist, wobei die Innengeometrie und die Außengeometrie derart ausgebildet sind, dass der Isolierkörper nur in einer Lage zum Gehäusekörper im Gehäusekörper anordenbar ist. Dies ermöglicht eine verpolungssichere und verdrehsichere Anordnung.

In einer Ausführungsform der ersten Rastverbindung ist vorgesehen, dass sich die wenigstens eine Rastnase der ersten Rastverbindung von der Wand des Gehäusekörpers nach außen erstreckt und dass die wenigstens eine Lasche der ersten Rastverbindung sich im Wesentlichen parallel zur Außenseite der Wand des Isolierkörpers erstreckt. In einer Ausführungsform der ersten Rastverbindung ist vorgesehen, dass die wenigstens eine Rastnase der ersten Rastverbindung sich von der Wand des Isolierkörpers nach außen erstreckt und dass die wenigstens eine Lasche der ersten Rastverbindung sich im Wesentlichen parallel zur Außenseite der Wand des Gehäusekörpers erstreckt.

Es kann vorgesehen sein, dass der Isolierkörper zumindest abschnittsweise eine Wand mit einer Innengeometrie zur Aufnahme des Kontakthalters umfasst, wobei der Kontakthalter zumindest abschnittsweise eine Wand mit einer mit der Innengeometrie korrespondierenden Außengeometrie aufweist, wobei die Innengeometrie und die Außengeometrie derart ausgebildet sind, dass der Kontakthalter nur in einer Lage zum Isolierkörper im Isolierkörper anordenbar ist. Dies ermöglicht eine verpolungssichere und verdrehsichere Anordnung.

In einer Ausführungsform der zweiten Rastverbindung ist vorgesehen, dass die wenigstens eine Rastnase der zweiten Rastverbindung sich von der Wand des Kontakthalters nach außen erstreckt und dass die wenigstens eine Lasche der zweiten Rastverbindung in der Wand des Isolierkörpers angeordnet ist.

Die Kontakte sind z.B. jeweils als Kontaktstift oder als Kontaktbuchs ausgebildet.

Es kann vorgesehen sein, dass die Ladesteckdose eine insbesondere fluiddichte Dichtung aufweist, die zwischen dem Isolierkörper und dem Gehäusekörper angeordnet ist. Durch die Dichtung sind der Isolierkörper und der Gehäusekörper insbesondere fluiddicht abgedichtet. Die Dichtung ist optional und kann z.B. bei der Ultraschallschweißverbindung oder der Klebeverbindung entfallen.

Das Verfahren zur Herstellung der Ladesteckdose umfasst ein Bereitstellen eines Isolierkörpers, insbesondere aus flammengeschützten Kunststoff, und eines Gehäusekörpers, insbesondere aus einem flammengeschützten Kunststoff oder zumindest teilweise aus einem nicht flammengeschützten Kunststoff, wobei der Isolierkörper im Gehäusekörper angeordnet wird, wobei der Isolierkörper Hülsen zur Aufnahme je eines elektrischen Kontakts der Ladesteckdose aufweist, wobei die elektrischen Kontakte in den Hülsen angeordnet werden, wobei ein jeweiliger elektrischer Kontakt durch eine jeweilige Hülse von den anderen elektrischen Kontakten elektrisch isoliert ist, und wobei der Isolierkörper und der Gehäusekörper durch eine erste Rastverbindung oder eine Schraubverbindung oder durch eine Ultraschallschweißverbindung oder durch eine Klebeverbindung verbunden werden.

Es kann vorgesehen sein, dass das Verfahren ein Anordnen eines Kontakthalters umfasst, wobei der Kontakthalter ausgebildet ist, den Isolierkörper im Gehäusekörper zu halten und mittels wenigstens einer Schraube mit dem Gehäusekörper verbunden wird oder mit einer zweiten Rastverbindung mit dem Isolierkörper verbunden wird.

Weitere vorteilhafte Ausführungsformen sind der folgenden Beschreibung und der Zeichnung entnehmbar. In der Zeichnung zeigt:
- Fig. 1: eine schematische Explosionszeichnung einer ersten Ausführungsform einer Ladesteckdose,
- Fig. 2: eine schematische Explosionszeichnung einer zweiten Ausführungsform der Ladesteckdose,
- Fig. 3: ein Flussdiagramm mit Schritten in einem Verfahren zur Herstellung der Ladesteckdose,
- Fig. 4a-f: eine schematische perspektivische Darstellung von Arbeitsergebnissen bei einer Herstellung der Ladesteckdose,
- Fig. 5a-c: eine schematische perspektivische Darstellung eines Beispiels für einen Gehäusekörper der Ladesteckdose,
- Fig. 6: eine schematische perspektivische Darstellung Teils einer Ladestation,
- Fig. 7a-c: eine schematische perspektivische Darstellung von Ausführungsformen von Kontakten der Ladesteckdose.

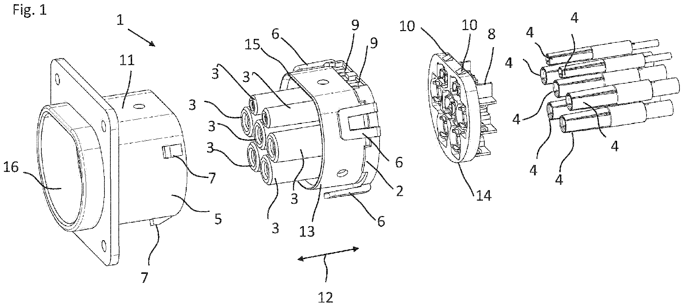

In Figur 1 ist eine schematische Explosionszeichnung einer ersten Ausführungsform einer Ladesteckdose 1 für ein Elektrofahrzeug dargestellt.

Die Ladesteckdose 1 umfasst einen Isolierkörper 2.

Der Isolierkörper 2 weist Hülsen 3 zur Aufnahme je eines elektrischen Kontakts 4 der Ladesteckdose 1 auf.

Im Beispiel sind sieben Kontakte 4 und sieben Hülsen 3 vorgesehen, wobei in jeder Hülse 3 einer der sieben Kontakte 4 angeordnet ist.

Im Beispiel sind eine Anzahl von Hülsen 3 und eine Anzahl von Kontakten 4 gleich. Es können auch weniger Kontakte 4 als Hülsen 3 vorgesehen sein. Beispielsweise sind fünf Kontakte 4 und sieben Hülsen 3 vorgesehen. Die Kontakte 4 erstrecken sich in einer Öffnung der jeweiligen Hülse 3. Es kann vorgesehen sein, dass die Öffnung einer Hülse 3, in der kein Kontakt 4 angeordnet ist, nicht durchgängig offen ist.

Ein jeweiliger elektrischer Kontakt 4 ist insbesondere im Bereich des Isolierkörpers 2, in dem sich die Hülsen 3 erstrecken, durch eine jeweilige Hülse 3 von den anderen elektrischen Kontakten 4 elektrisch isoliert.

Die Kontakte 4 sind im Beispiel jeweils als Kontaktstift ausgebildet. Es kann vorgesehen sein, dass einer oder mehrere der Kontakte statt als Kontaktstift als Kontaktbuchse ausgebildet sind.

Die Ladesteckdose 1 weist einen Gehäusekörper 5 auf. Der Isolierkörper 2 ist im Gehäusekörper 5 angeordnet.

Gemäß der ersten Ausführungsform sind der Isolierkörper 2 und der Gehäusekörper 5 durch eine erste Rastverbindung verbunden.

Die erste Rastverbindung weist im Beispiel wenigstens eine Lasche 6 und wenigstens eine Rastnase 7 auf.

Die wenigstens eine Lasche 6 ist im Beispiel am Isolierkörper 2 angeordnet. Die wenigstens eine Rastnase 7 ist im Beispiel am Gehäusekörper 5 angeordnet.

Die wenigstens eine Lasche 6 und die wenigstens eine Rastnase 7 sind im Beispiel derart angeordnet und ausgebildet, dass die wenigstens eine Rastnase 7 bei in den Gehäusekörper 5 eingesetztem Isolierkörper 2 in die wenigstens eine Lasche 6 eingerastet ist.

Die Ladesteckdose 1 weist einen Kontakthalter 8 auf.

Gemäß der ersten Ausführungsform ist der Isolierkörper 2 ausgebildet ist, den Kontakthalter 8 im Gehäusekörper 5 zu halten.

Der Gehäusekörper 5 umfasst zumindest abschnittsweise eine Wand 11 mit einer Innengeometrie zur Aufnahme des Isolierkörpers 2.

Der Isolierkörper 2 weist zumindest abschnittsweise eine Wand 13 mit einer mit der Innengeometrie korrespondierenden Außengeometrie auf.

Die Innengeometrie und die Außengeometrie sind im Beispiel derart ausgebildet, dass der Isolierkörper 2 nur in einer Lage zum Gehäusekörper 5 im Gehäusekörper 5 anordenbar ist.

Im Beispiel weisen die Innengeometrie und die Außengeometrie jeweils einen Querschnitt bezüglich einer Steckrichtung 12 der Ladesteckdose 1 auf, der einen runden oder abgerundeten Bereich und einen geraden Bereich umfasst. Der gerade Bereich kodiert im Beispiel die Lage, in der der Isolierkörper 2 im Gehäusekörper 5 anordenbar ist. Der gerade Bereich kodiert im Beispiel die Lage, in der ein Stecker in der Steckrichtung 12 in die Ladesteckdose 1 ein- oder ausgesteckt werden kann.

Die wenigstens eine Rastnase 7 der ersten Rastverbindung erstreckt sich im Beispiel von der Wand 11 des Gehäusekörpers 5 nach außen. Die wenigstens eine Lasche 6 der ersten Rastverbindung erstreckt sich im Beispiel im Wesentlichen parallel zur Außenseite der Wand 13 des Isolierkörpers 2.

Statt der am Isolierkörper 2 angeordneten wenigstens einen Lasche 6 und der am Gehäusekörper 5 angeordneten wenigstens einen Rastnase 7 oder zusätzlich dazu kann vorgesehen sein, dass wenigstens eine Lasche 6 am Gehäusekörper 5 und wenigstens eine Rastnase 7 am Isolierkörper 2 derart angeordnet und ausgebildet sind, dass die am Isolierkörper 2 angeordnete wenigstens eine Rastnase 7 bei in den Gehäusekörper 5 eingesetztem Isolierkörper 2 in die wenigstens eine am Gehäusekörper 5 ausgebildete Lasche 6 eingerastet ist.

Es kann vorgesehen sein, dass sich die wenigstens eine am Isolierkörper 2 angeordnete Rastnase 7 sich von der Wand 13 des Isolierkörpers 2 nach außen erstreckt und dass sich die wenigstens eine am Gehäusekörper angeordnete Lasche 6 sich im Wesentlichen parallel zur Außenseite der Wand 11 des Gehäusekörpers 5 erstreckt.

Gemäß der ersten Ausführungsform ist der Kontakthalter 8 mittels einer zweiten Rastverbindung mit dem Isolierkörper 2 verbunden.

Die zweite Rastverbindung weist im Beispiel wenigstens eine Lasche 9 und wenigstens eine Rastnase 10 auf.

Im Beispiel sind die wenigstens eine Lasche 9 am Kontakthalter 8 und die wenigstens eine Rastnase 10 am Gehäusekörper 5 derart angeordnet und ausgebildet, dass die wenigstens eine Rastnase 10 bei in den Gehäusekörper 5 eingesetztem Kontakthalter 8 in die wenigstens eine Lasche 9 eingerastet ist.

Stattdessen oder zusätzlich dazu kann vorgesehen sein, dass wenigstens eine Lasche 9 am Gehäusekörper 5 und wenigstens eine Rastnase 10 am Kontakthalter 8 derart angeordnet und ausgebildet sind, dass die wenigstens eine am Kontakthalter 8 angeordnete Rastnase 10 bei in den Gehäusekörper 5 eingesetztem Kontakthalter 8 in die wenigstens eine am Gehäusekörper 5 angeordnete Lasche 9 eingerastet ist.

Im Beispiel umfasst der Isolierkörper 2 zumindest abschnittsweise eine Wand 13 mit einer Innengeometrie zur Aufnahme des Kontakthalters 8.

Im Beispiel weist der Kontakthalter 8 zumindest abschnittsweise eine Wand 14 mit einer mit der Innengeometrie zur Aufnahme des Kontakthalters 8 korrespondierenden Außengeometrie auf.

Die Innengeometrie zur Aufnahme des Kontakthalters 8 und die Außengeometrie des Kontakthalters 8 sind im Beispiel derart ausgebildet, dass der Kontakthalter 8 nur in einer Lage zum Isolierkörper 2 im Isolierkörper 2 anordenbar ist.

Im Beispiel weisen die Innengeometrie zur Aufnahme des Kontakthalters 8 und die Außengeometrie des Kontakthalters 8 jeweils einen Querschnitt bezüglich der Steckrichtung 12 auf, der einen runden oder abgerundeten Bereich und einen geraden Bereich umfasst. Der gerade Bereich kodiert im Beispiel die Lage, in der der Kontakthalters 8 im Isolierkörper 2 anordenbar ist.

Im Beispiel ist die zweite Rastverbindung im geraden Bereich angeordnet.

Im Beispiel ist die geraden Bereiche der Querschnitte der Geometrien des Gehäusekörpers 5, des Isolierkörpers 2 und des Kontakthalters 8 in derselben Lage oder im Wesentlichen in derselben Lage orientiert angeordnet.

Im Beispiel erstreckt sich die wenigstens eine Rastnase 10 der zweiten Rastverbindung von der Wand 14 des Kontakthalters 8 nach außen. Im Beispiel ist die wenigstens eine Lasche 9 der zweiten Rastverbindung in der Wand 13 des Isolierkörpers 2 angeordnet.

Die Ladesteckdose 1 weist im Beispiel eine insbesondere fluiddichte Dichtung 15 auf. Die Dichtung 15 ist im Beispiel zwischen dem Isolierkörper 2 und dem Gehäusekörper 5 angeordnet.

Im Beispiel trägt eine dem Gehäusekörper 5 in der Steckrichtung 12 zugewandte Stirnseite der Wand 13 des Isolierkörpers 3 die Dichtung 15. Im Beispiel laufen die Wand 13 des Isolierkörpers, die Stirnseite und die Dichtung 15 um die Hülsen 3 um.

Der Gehäusekörper 5 weist eine Öffnung 16 zur Aufnahme eines Steckers in der Steckrichtung 12 auf. Der Isolierkörper 3 und die Hülsen 3 erstrecken sich im Beispiel in der Steckrichtung 12 derart, dass der Stecker bei einer Bewegung in der Steckrichtung 12 durch die Öffnung über die Hülsen 3 schiebbar ist, wobei mit den Kontakten 4 der Ladesteckdose 1 korrespondierende Kontakte des Steckers in die Hülsen 3 des jeweils korrespondieren Kontakts eintauchen können.

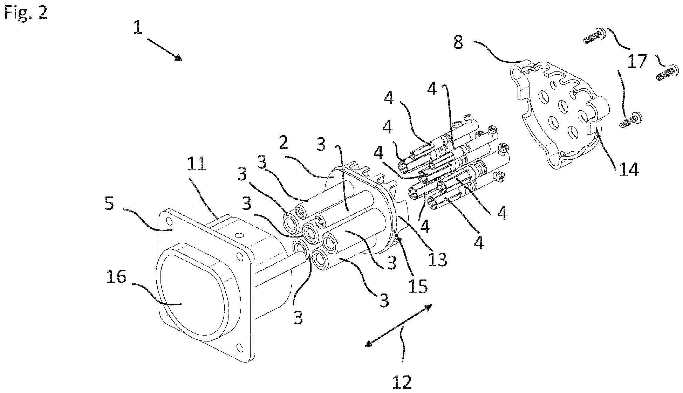

In Figur 2 ist eine Explosionszeichnung einer zweiten Ausführungsform der Ladesteckdose 1 schematisch dargestellt.

Die zweite Ausführungsform ist z.B. wie die erste Ausführungsform ausgebildet, wobei die Ladesteckdose 1 statt der ersten Rastverbindung und der zweiten Rastverbindung eine Schraubverbindung 17 aufweist.

Im Unterschied zur ersten Ausführungsform in welcher der Isolierkörper 2 den Kontakthalter 8 im Gehäusekörper 5 hält, ist gemäß der zweiten Ausführungsform vorgesehen, dass der Kontakthalter 8 ausgebildet, den Isolierkörper 2 im Gehäusekörper 5 zu halten. Der Kontakthalter 8 ist im Beispiel als Deckel für den Gehäusekörper 5 ausgebildet. Gemäß der zweiten Ausführungsform ist der Kontakthalter 8 mittels wenigstens einer Schraube 17 mit dem Gehäusekörper 5 verbunden. Im Beispiel sind drei Schrauben 17 vorgesehen. Der mit dem Gehäusekörper 5 durch die wenigstens eine Schraube 17 verbundene Kontakthalter 8 fixiert den Isolierkörper 2 im Beispiel im Gehäusekörper 5 derart, dass der Isolierkörper 2 bezüglich des Gehäusekörpers 5 in der Steckrichtung 12 der Ladesteckdose 1 unbeweglich oder im Wesentlichen unbeweglich ist.

Anstatt oder zusätzlich zur ersten Rastverbindung und zur zweiten Rastverbindung oder der Schraubverbindung 17 kann vorgesehen sein, dass der Isolierkörper 2 und der Kontakthalter 8 durch eine Ultraschallschweißverbindung oder durch eine Klebeverbindung verbunden sind und/oder dass der Gehäusekörper 5 und der Isolierkörper 2 durch eine Ultraschallschweißverbindung oder durch eine Klebeverbindung verbunden sind und/oder dass der Kontakthalter 8 und der Gehäusekörper 5 durch eine Ultraschallschweißverbindung oder durch eine Klebeverbindung verbunden sind.

Der Isolierkörper 2 ist beispielsweise aus einem flammengeschützten Kunststoff ausgebildet.

Der Isolierkörper 2 und der Gehäusekörper 5 können aus demselben Material bestehen. Der Gehäusekörper 5 kann anderes Material als der Isolierkörper 2 umfassen.

Der Gehäusekörper 5 ist beispielsweise aus einem flammengeschützten Kunststoff oder zumindest teilweise aus einem nicht flammengeschützten Kunststoff ausgebildet. Der Gehäusekörper 5 kann aus Metall sein, oder Metall umfassen.

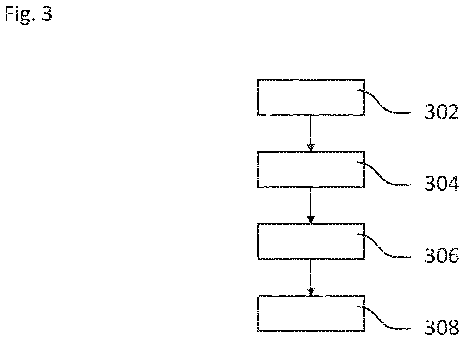

In Figur 3 ist ein Flussdiagramm eines Verfahrens zur Herstellung einer Ladesteckdose 1 für ein Elektrofahrzeug schematisch dargestellt.

Das Verfahren umfasst einen Schritt 302.

Im Schritt 302 wird der Isolierkörpers 2 und der Gehäusekörper 5 bereitgestellt.

Anschließend wird ein Schritt 304 ausgeführt.

Im Schritt 304 wird der Isolierkörper 2 im Gehäusekörper 5 angeordnet. Der Gehäusekörper 5 wird z.B. durch die erste Rastverbindung oder die Schraubverbindung 17 oder durch die Ultraschallschweißverbindung oder durch die Klebeverbindung verbunden.

Anschließend wird ein Schritt 306 ausgeführt.

Im Schritt 306 werden die elektrischen Kontakte 4 im Kontakthalter 8 angeordnet.

Anschließend wird ein Schritt 308 ausgeführt.

Im Schritt 308 wird der Kontakthalter 8 angeordnet. Dadurch werden die elektrischen Kontakte 4, die der Kontakthalter 8 hält, in den Hülsen 3 angeordnet.

Der Kontakthalters 8, der vom Isolierkörper 2 gehalten wird, wird z.B. mit der zweiten Rastverbindung mit dem Isolierkörper 2 verbunden.

Der Kontakthalters 8, der ausgebildet ist, den Isolierkörper 2 im Gehäusekörper 5 zu halten wird z.B. mittels wenigstens einer Schraube 17 mit dem Gehäusekörper 5 verbunden.

Im Beispiel ist der Isolierkörper 2 in der Ladesteckdose 1 bzw. wird der Isolierkörper 2 im Verfahren insbesondere hinsichtlich seines Materials, seiner Maße für eine Stecktiefe des Steckers und/oder Anordnung und/oder der Maße der Hülsen 3 und der Kontakte 4 gemäß der Norm IEC62196 ausgebildet.

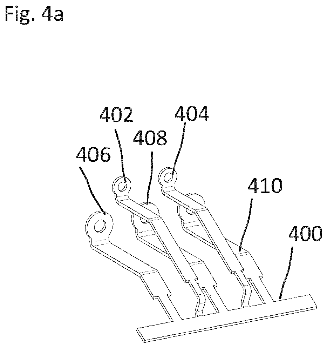

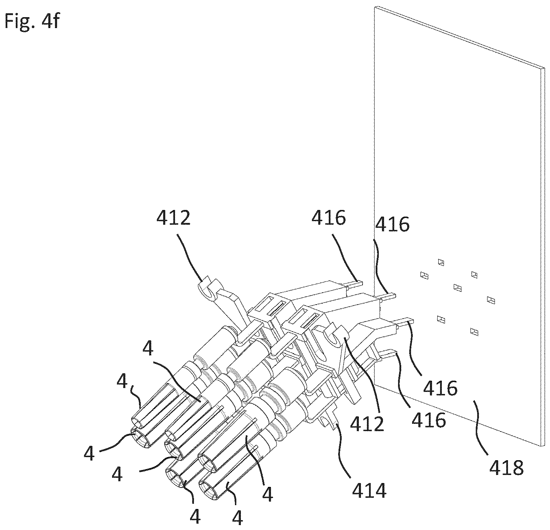

In den Figuren 4a bis 4c sind Arbeitsergebnisse aus einem Verfahren zur Herstellung der Kontakte 4 schematisch dargestellt.

In Figur 4a ist ein Stanzblech 400 mit einem ersten Signalleitungskontakt 402 z.B. für eine Signalleitung CP, einem zweiten Signalleitungskontakt 404 z.B. für eine Signalleitung PP, einem ersten Leistungskontakt 406 z.B. für einen Leiter L, einem zweiten Leistungskontakt 408 z.B. für eine Neutralleiter N und einem dritten Leistungskontakt 410 z.B. für einen Erdleiter PE perspektivisch dargestellt.

Die Leistungskontakte sind in einer Reihe nebeneinander angeordnet. Die Signalleitungskontakte sind in einer Reihe parallel zur Reihe der Leitungskontakte angeordnet.

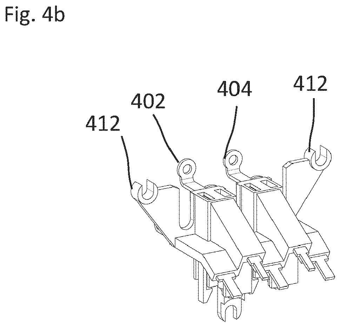

In Figur 4b ist eine zumindest teilweise Umspritzung der Signalleitungskontakte und der Leistungskontakte durch einen Kunststoff zur Gewährleistung von Isolierung und Stabilität dargestellt.

Die Umspritzung ist im Beispiel an zwei einander gegenüberliegenden Seiten der Reihe der Signalleitungskontakte als Montageschnittstelle 412 ausgebildet. Das Stanzblech 402 ist entfernt. Beispielsweise wird das Stanzblech 402 beim Schließen eines Formwerkzeugs zum Herstellen der Umspritzung getrennt.

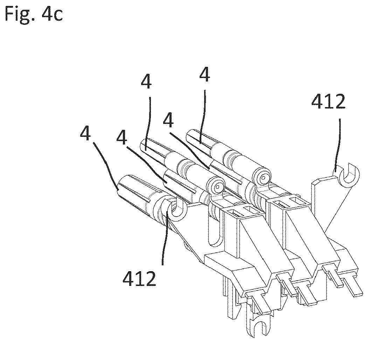

In Figur 4c sind gedrehte Kontakte 4 dargestellt, die im Beispiel durch Nieten mit dem jeweiligen Signalleitungskontakt bzw. Leistungskontakt verbunden sind.

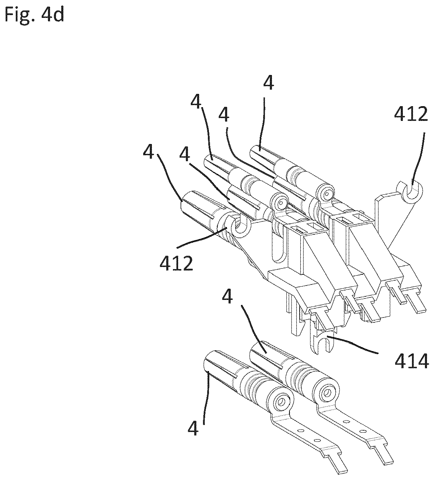

In Figur 4d sind zwei zusätzliche Kontakte 4 für einen ersten zusätzlichen Leiter L2 und einen zweiten zusätzlichen Leiter L3 dargestellt. Im Beispiel umfasst die Umspritzung eine Verrastung 414 je zusätzlichem Kontakt 4, an der der jeweilige zusätzliche Kontakt 4 durch Einklicken in die jeweilige Verrastung 414 montierbar ist.

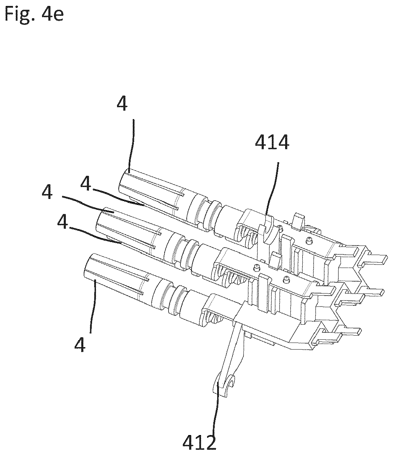

In Figur 4e ist eine erste Ausführungsform der Kontakte 4 perspektivisch dargestellt. Gemäß der ersten Ausführungsform der Kontakte 4 ist vorgesehen, dass die Signalleitungskontakte und die Leistungskontakte an ihrem dem jeweiligen Kontakt 4 abgewandten Ende einen Kontaktstift 416 für eine Montage auf einer Leiterplatte 418 aufweisen.

Der Gehäusekörper 5 kann unterschiedliche Formen seiner Außengeometrie aufweisen.

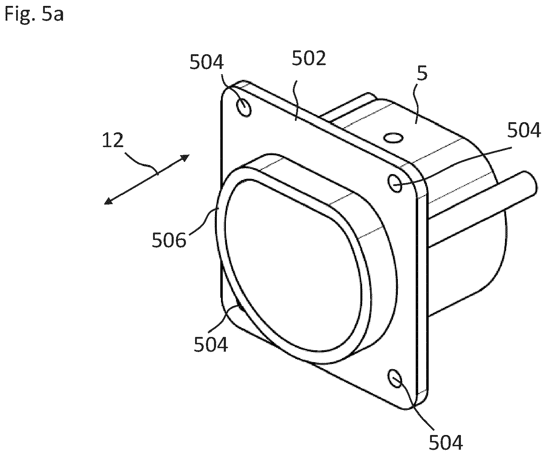

In Figur 5a ist ein Beispiel für den Gehäusekörper 5 perspektivisch dargestellt, in dem der Gehäusekörper 5 eine flache Montageplatte 502 aufweist, in der die Öffnung 16 angeordnet ist. Die Montageplatte 502 weist eine Montageschnittstelle 504 für eine Montage an einem Fahrzeug auf. Im Beispiel ist die Montageplatte 504 rechteckig, insbesondere quadratisch ausgebildet. Im Beispiel weist die Montageplatte 504 in den vier Ecken je eine Bohrung auf. Die Öffnung 16 ist in der Montageplatte 502 insbesondere mittig angeordnet. Im Beispiel weist die Montageplatte 502 einen um die Öffnung 16 umlaufenden Kragen 506 auf, der sich in der Steckrichtung 12 auf der dem Isolierkörper 2 abgewandten Seite der Montageplatte 502 von der Montageplatte 502 erhebt.

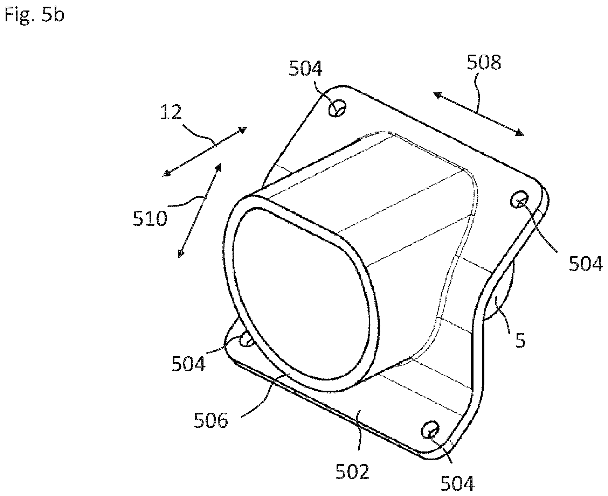

In Figur 5b ist ein Beispiel für den Gehäusekörper 5 perspektivisch dargestellt, in dem der Gehäusekörper 5 eine abgewinkelte Montageplatte 502 aufweist. Der Gehäusekörper 5 weist die Montageschnittstelle 504 und den Kragen 506 auf. Im Beispiel erstreckt sich die Montageplatte 502 in einer zur Steckrichtung 12 senkrechten oder im Wesentlichen senkrechten, horizontalen Richtung 508 gerade und ist in einer zur Steckrichtung 12 senkrechten oder im Wesentlichen senkrechten vertikalen Richtung 510 dreifach mit abgerundeten Kanten abgewinkelt. Die horizontale Richtung 508 ist im Beispiel die horizontale Richtung einer Einbaulage der Ladesteckdose 1 im Fahrzeug. Die abgewinkelte Montageplatte 502 weist beispielsweise eine an eine Geometrie des Fahrzeugs angepasste Form auf.

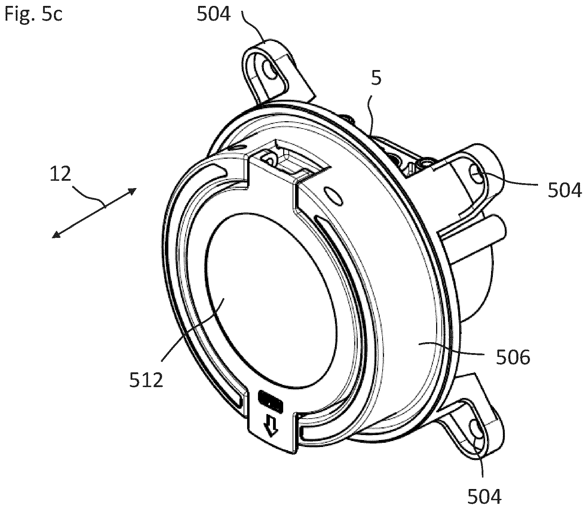

In Figur 5c ist ein Beispiel für den Gehäusekörper 5 perspektivisch dargestellt, der einen integrierten Deckel 512 aufweist. Der integrierte Deckel 512 ist im Beispiel am Kragen 506 angeordnet, und verschließt die Öffnung 16. Die Montageschnittstelle 504 umfasst im Beispiel mit integriertem Deckel 512 mehrere, insbesondere 4 Stege, die in einer Ebene senkrecht zur Steckrichtung 12 radial vom Gehäusekörper 5 abstehen.

Es kann vorgesehen sein, dass in der Montageplatte 502 oder im integrierten Deckel 512 eine Leuchtdiode, d.h. eine LED, eingelassen ist, z.B. um einen Status anzuzeigen.

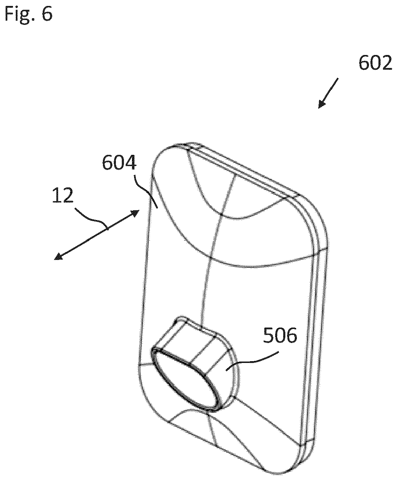

In Figur 6 ist ein Teil einer Ladestation 602 perspektivisch dargestellt, in welche die Ladesteckdose 1 integriert ist. Im Beispiel ragt der Kragen 506 in der Steckrichtung 12 aus einer Front 604 der Ladestation 602 heraus.

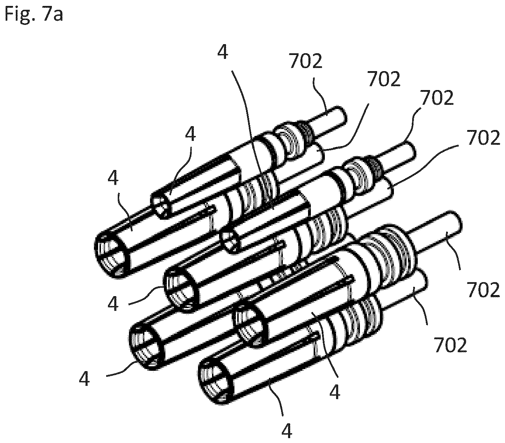

In Figur 7a ist eine zweite Ausführungsform der Kontakte 4 perspektivisch dargestellt. Gemäß der zweiten Ausführungsform der Kontakte 4 ist vorgesehen, dass die Signalleitungskontakte und die Leistungskontakte an ihrem dem jeweiligen Kontakt 4 abgewandten Ende einen Crimp-Anschluss 702 aufweisen.

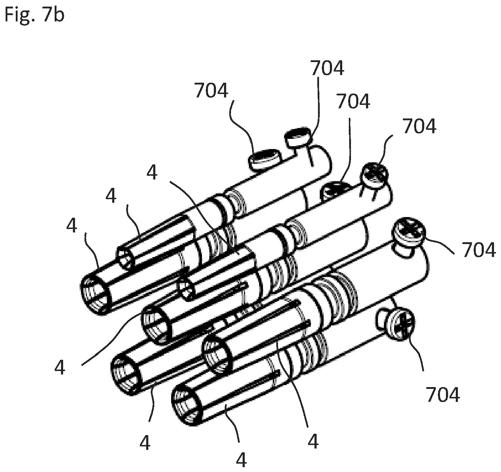

In Figur 7b ist eine dritte Ausführungsform der Kontakte 4 perspektivisch dargestellt. Gemäß der dritten Ausführungsform der Kontakte 4 ist vorgesehen, dass die Signalleitungskontakte und die Leistungskontakte an ihrem dem jeweiligen Kontakt 4 abgewandten Ende einen geraden Schraubanschluss 704 aufweisen.

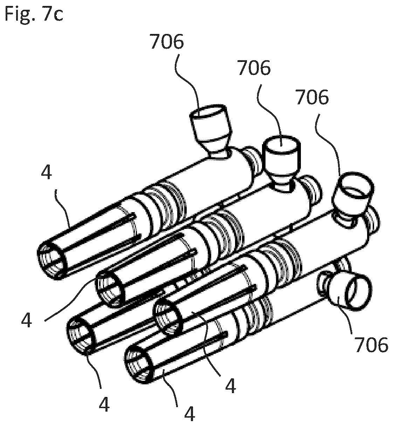

In Figur 7c ist eine vierte Ausführungsform der Kontakte 4 perspektivisch dargestellt. Gemäß der vierten Ausführungsform der Kontakte 4 ist vorgesehen, dass die Signalleitungskontakte und die Leistungskontakte an ihrem dem jeweiligen Kontakt 4 abgewandten Ende einen abgewinkelten Schraubanschluss 706 aufweisen.

## Patentansprüche

1. Ladesteckdose (1) für ein Elektrofahrzeug, **dadurch gekennzeichnet, dass** die Ladesteckdose (1) einen Isolierkörper (2) umfasst, wobei der Isolierkörper (2) Hülsen (3) zur Aufnahme je eines elektrischen Kontakts (4) der Ladesteckdose (1) aufweist, wobei ein jeweiliger elektrischer Kontakt (4) durch eine jeweilige Hülse (3) von den anderen elektrischen Kontakten (4) elektrisch isoliert ist, wobei die Ladesteckdose (1) einen Gehäusekörper (5) aufweist, wobei der Isolierkörper (2) im Gehäusekörper (5) angeordnet ist.

2. Ladesteckdose (1) nach Anspruch 1, **dadurch gekennzeichnet, dass** der Isolierkörper (2) aus einem flammengeschützten Kunststoff ausgebildet ist, wobei der Gehäusekörper (5) aus einem flammengeschützten Kunststoff oder zumindest teilweise aus einem nicht flammengeschützten Kunststoff ausgebildet ist.

3. Ladesteckdose (1) nach Anspruch 1 oder 2, **dadurch gekennzeichnet, dass** der Isolierkörper (2) und der Gehäusekörper (5) durch eine erste Rastverbindung (6,7) oder durch eine Schraubverbindung (17) oder durch eine Ultraschallschweißverbindung oder durch eine Klebeverbindung verbunden sind.

4. Ladesteckdose (1) nach einem der vorherigen Ansprüche, **dadurch gekennzeichnet, dass** die erste Rastverbindung wenigstens eine Lasche (6) und wenigstens eine Rastnase (7) aufweist, wobei die wenigstens eine Lasche (6) am Isolierkörper (2) und die wenigstens eine Rastnase (7) am Gehäusekörper (5) derart angeordnet und ausgebildet sind, dass die wenigstens eine Rastnase (7) bei in den Gehäusekörper (5) eingesetztem Isolierkörper (2) in die wenigstens eine Lasche (6) eingerastet ist, oder wobei die wenigstens eine Lasche (6) am Gehäusekörper (5) und die wenigstens eine Rastnase (7) am Isolierkörper (2) derart angeordnet und ausgebildet sind, dass die wenigstens eine Rastnase (7) bei in den Gehäusekörper (5) eingesetztem Isolierkörper (2) in die wenigstens eine Lasche (6) eingerastet ist.

5. Ladesteckdose (1) nach einem der vorherigen Ansprüche, **dadurch gekennzeichnet, dass** die Ladesteckdose (1) einen Kontakthalter (8) aufweist, wobei der Kontakthalter (8) ausgebildet ist, den Isolierkörper (2) im Gehäusekörper (5) zu halten oder wobei der Isolierkörper (2) ausgebildet ist, den Kontakthalter (8) im Gehäusekörper (5) zu halten.

6. Ladesteckdose (1) nach Anspruch 5, **dadurch gekennzeichnet, dass** der Kontakthalter (8) mittels wenigstens einer Schraube (17) mit dem Gehäusekörper (5) verbunden ist.

7. Ladesteckdose (1) nach Anspruch 5 oder 6, **dadurch gekennzeichnet, dass** der Kontakthalter (8) mittels einer zweiten Rastverbindung (9,10) mit dem Isolierkörper (2) verbunden ist.

8. Ladesteckdose (1) nach Anspruch 7, **dadurch gekennzeichnet, dass** die zweite Rastverbindung (9,10) wenigstens eine Lasche (9) und wenigstens eine Rastnase (10) aufweist, wobei die wenigstens eine Lasche (9) am Kontakthalter (8) und die wenigstens eine Rastnase (10) am Gehäusekörper (5) derart angeordnet und ausgebildet sind, dass die wenigstens eine Rastnase (10) bei in den Gehäusekörper (5) eingesetztem Kontakthalter (8) in die wenigstens eine Lasche (9) eingerastet ist, oder wobei die wenigstens eine Lasche (9) am Gehäusekörper (5) und die wenigstens eine Rastnase (10) am Kontakthalter (8) derart angeordnet und ausgebildet sind, dass die wenigstens eine Rastnase (10) bei in den Gehäusekörper (5) eingesetztem Kontakthalter (8) in die wenigstens eine Lasche (9) eingerastet ist.

9. Ladesteckdose (1) nach einem der vorherigen Ansprüche, **dadurch gekennzeichnet, dass** der Gehäusekörper (5) zumindest abschnittsweise eine Wand (11) mit einer Innengeometrie zur Aufnahme des Isolierkörpers (2) umfasst, wobei der Isolierkörper (2) zumindest abschnittsweise eine Wand (13) mit einer mit der Innengeometrie korrespondierenden Außengeometrie aufweist, wobei die Innengeometrie und die Außengeometrie derart ausgebildet sind, dass der Isolierkörper (2) nur in einer Lage zum Gehäusekörper (5) im Gehäusekörper (5) anordenbar ist.

10. Ladesteckdose (1) nach Anspruch 9, **dadurch gekennzeichnet, dass** die wenigstens eine Rastnase (7) der ersten Rastverbindung (6,7) sich von der Wand (11) des Gehäusekörpers (5) nach außen erstreckt und dass die wenigstens eine Lasche (6) der ersten Rastverbindung (6,7) sich im Wesentlichen parallel zur Außenseite der Wand (13) des Isolierkörpers (2) erstreckt, oder dass die wenigstens eine Rastnase (7) der ersten Rastverbindung (6,7) sich von der Wand (13) des Isolierkörpers (2) nach außen erstreckt und dass die wenigstens eine Lasche (6) der ersten Rastverbindung (6,7) sich im Wesentlichen parallel zur Außenseite der Wand (11) des Gehäusekörpers (5) erstreckt.

11. Ladesteckdose (1) nach einem der vorherigen Ansprüche, **dadurch gekennzeichnet, dass** der Isolierkörper (2) zumindest abschnittsweise eine Wand (13) mit einer Innengeometrie zur Aufnahme des Kontakthalters (8) umfasst, wobei der Kontakthalter (8) zumindest abschnittsweise eine Wand (14) mit einer mit der Innengeometrie korrespondierenden Außengeometrie aufweist, wobei die Innengeometrie und die Außengeometrie derart ausgebildet sind, dass der Kontakthalter (8) nur in einer Lage zum Isolierkörper (2) im Isolierkörper (2) anordenbar ist.

12. Ladesteckdose (1) nach Anspruch 11, **dadurch gekennzeichnet, dass** die wenigstens eine Rastnase (10) der zweiten Rastverbindung (9,10) sich von der Wand (13) des Kontakthalters (8) nach außen erstreckt und dass die wenigstens eine Lasche (9) der zweiten Rastverbindung (9,10) in der Wand (13) des Isolierkörpers (2) angeordnet ist.

13. Ladesteckdose (1) nach einem der vorherigen Ansprüche, **dadurch gekennzeichnet, dass** die Kontakte (4) jeweils als Kontaktstift oder als Kontaktbuchs ausgebildet sind.

14. Ladesteckdose (1) nach einem der vorherigen Ansprüche, **dadurch gekennzeichnet, dass** die Ladesteckdose (1) eine insbesondere fluiddichte Dichtung (15) aufweist, die zwischen dem Isolierkörper (2) und dem Gehäusekörper (5) angeordnet ist.

15. Verfahren zur Herstellung einer Ladesteckdose (1) für ein Elektrofahrzeug, **dadurch gekennzeichnet, dass** das Verfahren ein Bereitstellen (302) eines Isolierkörpers (2), insbesondere aus flammengeschützten Kunststoff, und eines Gehäusekörpers (5), insbesondere aus einem flammengeschützten Kunststoff oder zumindest teilweise aus einem nicht flammengeschützten Kunststoff, umfasst, wobei der Isolierkörper (2) im Gehäusekörper (5) angeordnet wird (304), wobei der Isolierkörper (2) Hülsen (3) zur Aufnahme je eines elektrischen Kontakts (4) der Ladesteckdose (1) aufweist, wobei die elektrischen Kontakte (4) in den Hülsen (3) angeordnet werden (308), wobei ein jeweiliger elektrischer Kontakt (4) durch eine jeweilige Hülse (3) von den anderen elektrischen Kontakten (4) elektrisch isoliert ist, und wobei der Isolierkörper (2) und der Gehäusekörper (5) durch eine erste Rastverbindung (6,7) oder eine Schraubverbindung (17) oder durch eine Ultraschallschweißverbindung oder durch eine Klebeverbindung verbunden werden (310).

16. Verfahren nach Anspruch 15, **dadurch gekennzeichnet, dass** das Verfahren ein Anordnen (308) eines Kontakthalters (8) umfasst, wobei der Kontakthalter (8) ausgebildet ist, den Isolierkörper (2) im Gehäusekörper (5) zu halten und mittels wenigstens einer Schraube (17) mit dem Gehäusekörper (5) verbunden wird oder mit einer zweiten Rastverbindung (9,10) mit dem Isolierkörper (2) verbunden wird.
